# EUROPÄISCHE PATENTSCHRIFT

(11) **EP 0 449 396 B1**
(45) Veröffentlichungstag und Bekanntmachung des Hinweises auf die Patenterteilung: **13.07.1994**
(21) Anmeldenummer: 91250050.1
(22) Anmeldetag: 22.02.1991
(51) Int. Cl.: A23C 20/02, A23C 11/10, A23J 1/14

(54) **Verfahren zur Herstellung einer proteinhaltigen Lupinenmilch, Verfahren zu deren Weiterverarbeitung sowie ein danach herstellbares tofuähnliches Lebensmittel**
Process for the production of lupin milk containing protein, and process for the further treatment of this product and tofu-like foodstuff obtained thereby
Procédé de préparation du lait de lupine contenant des protéines et procédé de préparation pour un traitement ultérieur de produit alimentaire succédané de tofu

(30) Priorität: 26.02.1990 DE 4006552; 25.04.1990 DE 4013894
(43) Veröffentlichungstag der Anmeldung: 02.10.1991
(73) Patentinhaber: Bremer, Eckhard, 27628 Sandstedt (DE)
(72) Erfinder: Bremer, Eckhard, 27628 Sandstedt (DE)
(74) Vertreter: Winkler, Andreas, Dr.

(56) Entgegenhaltungen:
- EP-A- 0 261 586
- CH-A- 258 290
- JAPANESE PATENT ABSTRACTS, JPAS/JPO, Derwent Publications Ltd, London, GB;& JP-A-63 087 955 (BUICHI KUSAKA) 01-10-1986

## Beschreibung

Die Erfindung betrifft ein Verfahren zur Herstellung einer proteinhaltigen Lupinenmilch, ein Verfahren zur Weiterverarbeitung dieses Produktes sowie ein danach herstellbares tofuähnliches Lebensmittel.

Die Sojabohne ist traditionell Ausgangsprodukt für die Herstellung von Sojamilch und daraus herstellbaren Produkten, wie z. B. Tofu. Aufgrund besonderer klimatischer Wachstumsbedingungen kann die Sojabohne allerdings nur in gewissen Klimazonen, wie bspw. im ostasiatischen Raum oder im Süden der USA, in großem Umfang angebaut werden.

Insbesondere für Länder, deren klimatische Verhältnisse den Anbau von Sojabohnen nicht erlauben, wie bspw. die Bundesrepublik Deutschland, ist es daher von größtem Interesse, ein sojamilchähnliches Produkt und davon ausgehend tofuähnliche Lebensmittel, die in sensorischer und/oder physiologischer Hinsicht dem traditionellen Produkt zumindest nicht unterlegen sein sollten, auf der Basis heimischer Rohstoffe zu schaffen.

Hierzu ist aber nicht nur die Auswahl dafür geeigneter Sorten erforderlich, sondern auch die Entwicklung eines neuen Herstellungsverfahrens, da es sich gezeigt hat, daß die schon seit Jahrtausenden überlieferten Verfahren zur Herstellung von Sojamilch und Tofu aus Sojabohnen bei anderen Rohstoffen nicht zu den gewünschten Ergebnissen führen. In Abhängigkeit von der Sortenwahl, bei der unterschiedliche Gehalte an Proteinen, Bitterstoffen und Farbstoffen eine entscheidende Rolle spielen, ist daher auch die verfahrenstechnische Vorgehensweise auf den neuen Rohstoff abzustimmen.

Aus EP-A-0 261 586 ist ein käseähnliches Produkt und ein Verfahren zu seiner Herstellung bekannt, in dem als Ausgangsmaterial u.a. Lupinensamen verwendet werden können, deren Milch durch Ultrafiltration und Abdampfung zu einem käseähnlichen Proteinextrakt konzentriert wird.

Aus JP-A-0 233 889 ist ein Verfahren zur Herstellung von Tofu auf der Basis von Sojamilch unter Zusatz von Fällungsmittel bekannt.

Der Erfindung liegt daher die Aufgabe zugrunde, ein Verfahren zur Herstellung eines sojamilchähnlichen Produktes auf der Basis heimischer Rohstoffe zu schaffen sowie eine Weiterverarbeitung zu einem tofuähnlichen Lebensmittel zu entwickeln.

Erfindungsgemäß wird diese Aufgabe dadurch gelöst, daß vorgequollene Lupinensamen zermahlen werden, die so entstandene Maische ggf. mit weiterem Wasser zu einem dickflüssigen Brei verrührt und anschließend die proteinhaltige Lupinenmilch bei höchstens Raumtemperatur abgepreßt wird.

Besonders vorteilhaft sind dabei als Ausgangsmaterial bitterstoffreie oder -arme Zuchtformen der Gelben oder Weißen Lupine.

Weiterhin schlägt die Erfindung vor, daß der pH-Wert des dickflüssigen wäßrigen Breis aus zermahlenen Lupinensamen zur Erhöhung der Eiweißausbeute beim Abpressen der Lupinenmilch gezielt verändert wird.

Weiterhin stellt die Erfindung ein Verfahren zur Herstellung eines tofuähnlichen Lebensmittels auf der Basis des erfindungsgemäßen Verfahrens zur Herstellung von Lupinenmilch zur Verfügung, bei dem die Lupinenmilch in zur Ausfällung der Proteine ausreichendem Maße erhitzt wird und abschließend die klare Molke von den ausgefällten Proteinen abgetrennt und letztere zu dem gewünschten Produkt verpreßt werden. Dabei ist es bevorzugt, die Lupinenmilch über einen Zeitraum von 20 bis 50 min bei 100°C im Wasserbad zu erhitzen.

Schließlich betrifft die Erfindung noch ein tofuähnliches Lebensmittel, das nach dem erfindungsgemäßen Verfahren zur Weiterverarbeitung der nach dem erfindungsgemäßen Verfahren hergestellten Lupinenmilch herstellbar ist.

Mit dem neuartigen Verfahren wird es erstmals möglich, auch die Lupine, die eine große Anzahl wertvoller Proteine enthält, zur Herstellung eines sojamilchähnlichen Produktes und daraus herstellbarer tofuähnlicher Lebensmittel einzusetzen. Die bisherige Hauptanwendung von Lupinen lag in seiner Verwendung als Dünge- oder Futtermittel. Eine Nutzung für die menschliche Ernährung wäre aufgrund des hohen Proteingehaltes dieser Pflanzen zwar schon lange erstrebenswert gewesen, ist aber, insbesondere wohl auch wegen der Schwierigkeiten der Herstellung eines marktgerechten Produktes, noch nie ernsthaft in Angriff genommen worden.

Die erfindungsgemäße Lupinenmilch sowie das daraus herstellbare tofuähnliche Lebensmittel stellen nicht nur Produkte dar, die im Hinblick auf Geschmack und/oder Konsistenz den herkömmlichen Sojaprodukten zumindest gleichwertig sind, sondern bieten vor allen Dingen den Vorteil, daß der Rohstoff, nämlich Lupinen, in Mitteleuropa ohne Probleme angebaut werden kann. Dabei ist es zusätzlich von Vorteil, daß die Kultivierung von Lupinen auch ökologisch unbedenklich ist, da aufgrund der symbiontischen Beziehung der Lupinen zu Rhizobien eine Stickstoffdüngung, wie sie bei den meisten Kulturpflanzen erfolgen muß, nicht erforderlich ist.

Hervorzuheben ist noch, daß die neuartige Lupinenmilch nicht nur als Zwischenprodukt für die Herstellung der erwähnten tofuähnlichen Lebensmittel, sondern auch analog zu den Anwendungsbereichen der bekannten Sojamilch als proteinhaltiger Trunk verwendet werden kann.

Weitere Merkmale und Vorteile der Erfindung ergeben sich aus der nachfolgenden Beschreibung, in der Ausführungsbeispiele der Erfindung näher erläutert werden.

Prinzipiell geht man bei der Durchführung des erfindungsgemäßen Verfahrens wie folgt vor:

Die Lupinensamen werden vor dem Zermahlen in Wasser eingeweicht. Sie nehmen dabei etwa die gleiche Menge Wasser auf, wie ihrem Eigengewicht entspricht. Diese vorgequollenen Lupinensamen werden zermahlen und die so entstandene Maische wird ggf. unter Zusatz von weiterem Wasser zu einem dickflüssigen Brei verrührt, aus dem man anschließend die Lupinenmilch abpreßt. Gezielte pH-Wertänderungen (in beide Richtungen) können, wie aus der Lebensmitteltechnologie bekannt ist, die Eiweißausbeuten in diesem Verfahrensschritt optimieren. Dabei ist es wesentlich, daß die Herstellung der Lupinenmilch auf kaltem Wege, d.h. ohne gleichzeitige Erhitzung der Maische, erfolgt.

Zu dieser Milch gibt man ggf. ein Fällungsmittel in der angegebenen Menge in einer Charge zu. Die Zugabe des Fällungsmittels kann aber auch portionsweise vor und/oder während der erwähnten Erhitzung der Lupinenmilch erfolgen. Als Fällungsmittel eignet sich prinzipiell jede Substanz, die auch bei der herkömmlichen Sojabohnen-Tofuherstellung verwendet werden kann. Erfindungsgemäß wird Magnesiumchlorid in einer Menge von 1 g pro Liter Lupinenmilch vorgeschlagen. Nach oder ggf. noch während der fakultativen Zugabe des Fällungsmittels wird die Lupinenmilch erhitzt, vorzugsweise etwa 30 min bei 100°C im Wasserbad. Man kann beobachten, daß sich bei diesem Prozeß die klare Molke von den gefällten, großflockigen Proteinen trennt. Es ist hervorzuheben, daß (im Gegensatz zur traditionellen Tofuherstellung) für die Ausfällung des Proteins die Zugabe eines Fällungsmittels nicht unbedingt erforderlich ist, den entsprechenden Prozeß aber beschleunigt.

Die Molke wird abschließend durch ein geeignetes engmaschiges Sieb abgegossen und die verbleibenden Proteine in eine Form gepreßt, um einerseits restliche Molke zu entfernen und andererseits das gewünschte schnittfeste Produkt zu erhalten.

### Vergleichsbeispiel

500 g Lupinensamen werden mit 1 l Wasser zwei Stunden lang gekocht. Anschließend werden die Lupinensamen eingemaischt und diese Maische vor dem Abpressen noch eine weitere Stunde gekocht. Nach dem Abpressen der Lupinenmilch aus der heißen Maische, wird diese mit der angegebenen Menge Magnesiumchlorid versetzt.

Aus 1 kg der trockenen Lupinensamen erhielt man 17 g Protein. Dies entspricht einer Ausbeute von 1,7 %.

### Beispiel 1

500 g Lupinensamen wurden bei 40°C im Wasserbad zwei Stunden lang vorgequollen. Anschließend wurde die Lupinenmilch in der geschilderten Weise auf kaltem Wege hergestellt, d.h. es erfolgte keine Erhitzung der Maische.

Anschließend wurde die Lupinenmilch etwa 40 min bei 100°C auf dem Wasserbad erhitzt, bis sich Molke und Protein gut sichtbar getrennt hatten. Danach wurde die klare Molke abgetrennt und die ausgefällten Proteine in die gewünschte Form gebracht.

Aus 1 kg trockenen Lupinensamen gewann man in diesem Fall 104 g Protein. Das entspricht einer Ausbeute von 10,4 %.

### Beispiel 2

500 g Lupinensamen wurden über Nacht im Kühlschrank in 1 l Wasser vorgequollen und am nächsten Morgen kalt eingemaischt. Diese Maische wurde mit kaltem Wasser verdünnt und zwei Stunden lang kontinuierlich gerührt. Dann wurde die Lupinenmilch kalt abgepresst, Magnesiumchlorid in der angegebenen Menge zugesetzt, die Lupinenmilch etwa 30 min auf dem Wasserbad bei 100°C erhitzt und, wie in Beispiel 1 beschrieben, weiterverarbeitet.

Aus 1 kg trockenen Lupinensamen gewann man 100 g Protein. Dies entspricht einer Ausbeute von 10 %.

Die in der vorstehenden Beschreibung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Verfahren zur Herstellung einer proteinhaltigen Lupinenmilch, dadurch gekennzeichnet, daß vorgequollene Lupinensamen zermahlen werden, die so entstandene Maische ggf. mit weiterem Wasser zu einem dickflüssigen Brei verrührt und anschließend die proteinhaltige Lupinenmilch bei höchstens Raumtemperatur abgepreßt wird.

2. Verfahren nach Anspruch 1, dadurch gekennzeichnet, daß als Ausgangsmaterial bitterstoffreie oder -arme Zuchtformen der Gelben oder Weißen Lupine verwendet werden.

3. Verfahren nach Anspruch 1 oder 2, dadurch gekennzeichnet, daß der pH-Wert des dickflüssigen wäßrigen Breis aus zermahlenen Lupinensamen zur Erhöhung der Eiweißausbeute beim Abpressen der Lupinenmilch gezielt verändert wird.

4. Verfahren zur Herstellung eines tofuähnlichen Lebensmittels auf der Basis einer nach den Ansprüchen 1 bis 3 hergestellten Lupinenmilch, dadurch gekennzeichnet, daß die Lupinenmilch in zur Ausfällung der Proteine ausreichendem Maße erhitzt wird und daß abschließend die klare Molke von den ausgefällten Proteinen abgetrennt und letztere zu dem gewünschten Produkt verpreßt werden.

5. Verfahren nach Anspruch 4, dadurch gekennzeichnet, daß die Lupinenmilch für einen Zeitraum von 20 min bis 50 min bei 100°C im Wasserbad erhitzt wird.

6. Tofuähnliches Lebensmittel, herstellbar nach einem Verfahren nach einem der Ansprüche 4 und 5.

## Claims

1. A process for the preparation of a protein-containing lupin milk, characterised in that pre-swollen lupin seeds are ground, the resulting mash is stirred into a viscous pulp, with further water if necessary, and then the protein-containing lupin milk is expressed at no more than room temperature.

2. A process according to claim 1, characterised in that the feed material used is cultivars of the yellow or white lupin free from or having low contents of bitter substances.

3. A process according to claim 1 or 2, characterised in that the pH of the viscous aqueous pulp of ground lupin seeds is selectively changed to increase the protein yield on expression of the lupin milk.

4. A process for the production of a tofu-like food based on a lupin milk produced in accordance with claims 1 to 3, characterised in that the lupin milk is heated to an extent sufficient to precipitate the proteins and then the clear whey is separated from the precipitated proteins and the latter are pressed to give the required product.

5. A process according to claim 4, characterised in that the lupin milk is heated in a water bath for a period of from 20 minutes to 50 minutes at 100°C.

6. A tofu-like food, adapted to be produced by a process according to claim 4 or 5.

## Revendications

1. Procédé de préparation d'un lait de lupin contenant des protéines, caractérisé par le fait que l'on broie des graines de lupin prégonflées, on délaye éventuellement le mout ainsi obtenu avec d'autres quantités d'eau pour obtenir une purée épaisse et on sépare ensuite par essorage, à température ordinaire au maximum, le lait de lupin contenant des protéines.

2. Procédé selon la revendication 1, caractérisé par le fait que l'on utilise, comme matériau de départ, des variétés cultivées, exemptes de principes amers ou pauvres en principes amers, du lupin jaune ou blanc.

3. Procédé selon une des revendications 1 ou 2, caractérisé par le fait que l'on modifie de manière définie le pH de la purée épaisse, aqueuse de graines de lupin broyées en vue d'augmenter le rendement en albumine lors de la séparation du lait de lupin par essorage.

4. Procédé de préparation d'un aliment semblable au "tofu", à base d'un lait de lupin préparé selon les revendications 1 à 3, caractérisé par le fait que, pour précipiter les protéines, on chauffe le lait de lupin à une température suffisamment élevée, on sépare finalement le petit-lait limpide des protéines précipitées et on comprime celles-ci pour obtenir le produit souhaité.

5. Procédé selon la revendication 4, caractérisé par le fait que l'on chauffe le lait de lupin pendant une durée de 20 min à 50 min à 100°C, au bain-marie.

6. Aliment rappelant le "tofu", préparé par un procédé selon l'une des revendications 4 ou 5.
